# EUROPÄISCHE PATENTSCHRIFT

(11) **EP 1 028 150 B1**
(45) Veröffentlichungstag und Bekanntmachung des Hinweises auf die Patenterteilung: **29.09.2004**
(21) Anmeldenummer: 99106921.2
(22) Anmeldetag: 08.04.1999
(51) Int. Cl.: C09G 1/00, C11D 3/22, C11D 3/37

(54) **Schutz- und Glanzschicht aus wasserlöslichen Polymeren zur Pflege gegen nachfolgende Verschmutzung**
Protective and gloss layer from water-soluble polymers for preserving against fouling
Couche protectrice et brillante formée de polymères solubles dans l'eau pour préserver de la salissure

(30) Priorität: 10.02.1999 CH 25799
(43) Veröffentlichungstag der Anmeldung: 16.08.2000
(73) Patentinhaber: TUFTY GmbH, 67661 Kaiserlauten (DE)
(72) Erfinder: Karg, Ernst Jörn, 67661 Kaiserslauten (DE)
(74) Vertreter: Beckord, Klaus

(56) Entgegenhaltungen:
- EP-A- 0 897 964
- WO-A-97/23606
- US-A- 3 635 827
- US-A- 4 460 490

## Beschreibung

### Einleitung

In den meisten Haushalten der industrialisierten Länder wird das Essgeschirr mit einem Geschirrspüler gewaschen. Die mechanisch reinigende Wirkung beim Handwaschen wird hierbei durch scharfe Wasserstrahlen und ein relativ stark alkalisches Geschirrspülmittel ersetzt. Dieser Vorgang hat zur Folge, dass die Oberfläche von Porzellan, Glas und Metallen schnell angegriffen und nach längerer Zeit matt wird. Bei nachfolgender Verschmutzung haftet der Schmutz noch besser.

Auch die modernen Reinigungsmittel für das Badezimmer, WC, Fensterscheiben und Küche sowie viele Gebrauchsgegenstände enthalten relativ aggressive Chemikalien die zwar die behandelte Oberfläche gut reinigen, jedoch keinen Schutz gegen eine nachfolgende Verschmutzung gewährleisten.

Die vorliegende Erfindung beschreibt verschiedene Produkte und Verfahren um beim normalen Waschvorgang eine glänzende Schutzschichte auf die gereinigte Oberfläche aufzubringen die ein nachfolgendes Verschmutzen verzögen und die Haftfähigkeit des Schmutzes auf der Oberfläche vermindern kann.

### Beschreibung der Erfindung

Die vorliegende Erfindung betrifft einen oder mehrere kleine Plastikkörper aus wasserlöslichen Polymeren die in den Geschirrspüler oder das Reinigungsmittel gegeben werden und dort bis zur völligen Auflösung verbleiben. Bei jedem Waschvorgang löst sich eine sehr geringe Menge des wasserlöslichen Polymeren im Waschwasser und bildet einen glänzenden Film auf der Oberfläche von Porzellan, Emaille, Glas und Metall des Geschirres und der Bestecke.

In einer weiteren Ausführung kann die Mischung der wasserlöslichen Polymeren zu einem Film verarbeitet werden. Der Polymerfilm wird zum Einpacken des Waschmittels in Form einer Einmal-Dosierpackung verwendet. Er löst sich dann beim Waschvorgang auf und ein Teil der Polymeren bildet den glänzenden Schutzfilm auf den gewaschenen Oberflächen.

Andere Zusatzstoffe die in das wasserlösliche Polymer eingearbeitet werden können haben den Zweck noch zusätzlich für den Verbraucher angenehme Wirkungen zu erzielen.

Ohne Anspruch auf Vollständigkeit seien erwähnt: bakterizide Wirkstoffe die den Innenraum des Geschirrspülers desinfizieren, Aromastoffe um einen angenehmen Geruch zu bewirken sowie Komplexbildner und Säuren die einer Kalkablagerung entgegen wirken.

Unsere Versuche haben überraschenderweise gezeigt, dass die natürlichen organischen Polymere Knochenleim, Gelatine und die synthetischen Polymere des Vinylalkohols (Polyvinylalkohol) im heissen Waschwasser eines Geschirrspülers nur in geringen Mengen löslich sind wenn sie in Form eines kompakten Körpers vorhanden sind. Der geringe lösliche Anteil wird nur von der Oberfläche des kompakten Körpers abgelöst. Diese geringe Menge genügt jedoch um ganz oder teilweise als ein unsichtbarer Schutz - und Glanzfilm wärend des Spülvorganges auf die Oberfläche von Porzellan, Emaille, Lack, Plastik, Glas und Metall aufzuziehen.

Dieser Schutzfilm bewirkt einen besseren Glanz des Geschirres. Er vermindert auch die Haftung von Speiseresten (Tee, Kaffee, Lippenstift usw.) bei einer nachfolgenden Verwendung des Geschirres. Bei Biergläsern zeigte sich eine bessere Stabilität des Schaumes in Gläsern die mit diesem festen Glanzspüler in der Maschine gewaschen wurden.

Den gleichen Effekt erzielt man wenn die genannten Polymere als kleine Körnchen in pulverförmige oder gelförmige Waschmittel gegeben werden oder ein vorgefertigter, wasserlöslicher Film als Verpackung einer Einmal-Dosierung verwendet wird.

Durch geeignete Formulierung ist es möglich in die genannten wasserlöslichen Polymere Zusätze einzuschliessen welche die Anwendung des Glanzspülers im Geschirrspüler oder generell beim Wasch - und Putzvorgang noch verbessern und angenehmer machen.

Vorteilhafte Zusätze sind :
a) Bakterizide wie z.B. Irgasan DP-300 (Ciba S.C., Basel). Durch die Abtötung der Bakterien wird ein muffiger Geruch verhindert der sich besonders in älteren Geschirrspülern und WC - Becken durch mikrobielle Zersetzung bildet.
b) Aroma und Duftstoffe. Sie bewirken einen angenehmen Geruch
c) Antikalkmittel wie Zitronensäure, Fumarsäure und andere Fruchtsäuren sowie anorganische und organische lonenaustauscher.
d) Metallschutzmittel.
e) Frostschutzmittel für die Autoscheibenwaschanlagen.
f) Tensid - Mischungen, mit und ohne Wasser für Scheibenreiniger sowie Zusätze von Alkoholen, Methylglycol und Enzyme.
g) Natriumcarbonat, nichtioninische Tenside, Bleichmittel auf Sauerstoffbasis, Phosphate, Protease und Amylase.
h) Pflanzenschutz- und Pflegemittel.
i) Basen für Autowaschmittel.
k) Leder- und Plastikpflegemittel.
l) Glasreiniger jeglicher Art.
m) Emulgatoren
n) Fussbodenreinigungsmittel, besonders für Stein- und Kachelböden.

Die vorliegende Erfindung soll anhand der folgenden Beispiele genauer erläutert werden.

### Beispiel 1 : fester Schutzschicht - Glanzspüler mit Polyvinylalkohol

| | |
|---|---|
| Polyvinylalkohol * | 84,0 % |
| Irgasan ® DP-300 (Ciba S.C., Basel) | 0,5 % |
| Parfüm Citrone 38.481 (Firmenich SA, Genf) | 9,0 % |
| Glycerinmonooleat | 5,0 % |
| Aerosil ® | 1,0 % |
| Zitronensäure | 0,5 % |
| | 100,0 % |

Herstellung : alle Bestandteile intensiv vermischen und bei 220°C extrudieren. Spritzgiessen in Form einer ca 30 g schweren Kugel. Im Geschirrspüler verbleibt diese Kugel bei normalem Gebrauch im Hausshalt 5 - 6 Wochen bevor sie sich gänzlich auflöst.

### Beispiel 2 : Schutzschicht - Glanzspüler mit Gelatine und Stärke

| | |
|---|---|
| Gelatine Type A 200 | 10,0 % |
| Maisstärke | 10,0 % |
| Zitronensäure | 0.5 % |
| Polyvinylalkohol* | 64.5 % |
| Parfüm Citrone 38.481 (Firmenich SA, Genf) | 15,0 % |
| | 100,0 % |

### Herstellung :

alle Bestandteile gut vermischen dann bei 230°C zu Kugeln ca. von 30 g spritzgiessen. Diese Kugeln lösen sich im Geschirrspüler langsam auf und halten unter normalen Bedingungen ungefähr 6 Wochen bis zur völligen Auflösung.

Die Mischungen von Beispiel 1 und 2 können auch zu kleinen Körnchen, Tabletten oder Sternchen von 1-2 mm Durchmesser spritzgegossen und einem Pulver oder gelförmigen Waschmittel zugesetzt werden.
Desgleichen können Sie durch Extrusion zu einem dünnen Film geformt werden der zum Einpacken einer einmal-Dosis von pulver - oder gelförmigen Waschmitteln verwendet wird.

* Verschiedene Hersteller (Clariant, Dupont, Wacker Chemie, Soltec) liefern geeignete Typen von Polyvinylalkohol. In diesem Beispiel wurde Mowiol ^{R} 8-88 von Clariant, Deutschland verwendet. Durch Kombination mit einem weniger löslichen Mowioltyp z.B. 10-98 kann die Löslichkeit und damit die Verwendungsdauer des festen Glanzspülers geregelt werden.

### Beispiel 3 : wasserlöslicher Schutzlack für Spül - und WC-Becken (nicht gemäß der Erfindung)

| | |
|---|---|
| Wasser | 67,85 |
| Gelatine Type A200 | 2,00 |
| Polyvinylalkohol * | 18,00 |
| Glycerin | 6,00 |
| Parfün Citrone 38.481 ( Firmenich, Schweiz ) | 3,50 |
| Tween 20 (lCl, Grt. Brit. ) | 0,50 |
| Bardac 22 ( Lonza, Schweiz ) | 2,00 |
| Benzoesäure | 0,05 |
| Zitronensäure | 0,10 |
| Farbstoff nach Belieben | |
| | 100,00 |

### Herstellung:

Gelatine und Polyvinylalkohol heiss im Waser lösen, dann die anderen Bestandteile zugeben. Der dickflüssige Lack wird mit einem Pinsel, Roller oder einer anderen Auftragsvorrichtung auf die Innenfläche von WC-Becken oder anderen Keramikbehältern aufgetragen. Er bildet beim Antrocknen eine feste Schichte die sich beim Gebrauch von der Oberfläche her langsam und schichtweise ablöst und somit das Anhaften von Schmutz verhindert.

### Beispiel 4 : flüssiger Allzweckreiniger für Keramik, Glas, Geschirr, Bildschirme und andere Oberflächen. (nicht gemäß der Erfindung)

| | |
|---|---|
| Wasser | 70,5 |
| Polyvinylalkohol * | 1,5 |
| Hi Cap (National Starch, USA) | 1,0 |
| Gelatine Type 1200 | 0,5 |
| Texapon NSO IS (Henkel, Deutschld.) | 25,0 |
| Comperlan KD (Henkel, Deutschld.) | 2,0 |
| Parfüm Citrone 38.481 (Firmenich, Schweiz) | 0,3 |
| Kathon CG (Röhm & Haas, USA) | 0,2 |
| | 100,0 |

### Herstellung :

Polyvinylalkohol und Gelatine im Wasser heiss lösen, dann die anderen Bestandteile zusetzen und gut vermischen.

### Beispiel 5 : Glanzgebende und desodorisierende, wasserlösliche Folie zur Verpackung von Geschirrspülertabletten oder Pulver

| | |
|---|---|
| Parfüm Citrone natürlich oder naturidentisch | 3,5 % |
| Tween 20 (lCl-Surfactants GB) (Sorbitanlaurat ethoxyliert) | 2,5 % |
| Soltec 1220 T10 (Soltec France) (Polyvinylalkohol für Folien) | 94,0 |
| | 100,0% |

### Herstellung:

Parfüm und Tween 20 homogen vermischen und in das Soltec- Granulat einrühren. Die Versuchsfolie wurde bei 160 - 180°C mit einer Brabender Labor-Folienblasanlage zu einem Film von 100 - 120 micron Dicke geblasen. Wird diese Folie zum Verpacken von Tabletten oder Pulver die als Einzeldosis für Geschirrspülerreinigungsmittel dienen verwendet, ergeben sich folgende Vorteile verglichen mit der normalen Folienverpackung :

Die Verpackungsfolie muss nicht entfernt werden, daher keine Berührung der agressiven Waschmittel.

Die Folie löst sich beim Waschvorgang auf und bewirkt einen schönen Glanz des Geschirres und einen angenehmen Duft in der Sprülmaschine.

### Beispiel 6 : Waschflüssigkeit für Autoscheiben (nicht gemäß der Erfindung)

| | |
|---|---|
| Wasser | 90,0 |
| Lösungsmittel APV (Hüls Chemie, Deutschld.) (Diethylenglycolmonoethylether) | 5,0 |
| Texapon T42 (Henkel, Deutschld.) (Triethanolaminlaurylsulfat) | 1,7 |
| Hi-cap (Nat. Starch, USA) (chemisch mödifiziertes Dextrin) | 0,5 |
| Mowiol 8-88 (Clariant, Schweiz) (Polyvinylalkohol) | 2,0 |
| Glycerin | 0,8 |
| Konservierungsmittel | q.s. |
| | 100,0 |

Herstellung : Mowiol im kochenden Wasser lösen, dann die restlichen Bestandteile zusetzen und auflösen. Kann direkt oder verdünnt angewendet werden.

### Beispiel 7 : Glanz- und Waschlösung für Blattpflanzen (nicht gemäß der Erfindung)

| | |
|---|---|
| Wasser | 97,2 |
| Mowiol 8-88 | 1,0 |
| Hi-cap | 0,5 |
| Texapon NSO (Henkel, Detuschld.) | 0,1 |
| Glyzerin | 1,5 |
| Konservierungsmittel | q.s. |
| | 100,0 |

Herstellung: Mowiol im heissen Wasser lösen dann die anderen Bestandteile zugeben und lösen. Kann konzentriert oder mit Wasser verdünnt angewendet werden.

## Patentansprüche

1. Verwendung von wasserlöslichen Polymeren in Form eines oder mehrerer fester kompakter Körper oder eines Films zur Bildung einer Schutz-, Glanz- und Pflegeschicht auf der Oberfläche von Gebrauchsgegenständen aus Glas, Keramik, Porzellan, Ton, Leder, Metall und Plastik, wobei diese aus einer wässrigen Wasch-, Pflege- oder Reinigungslösung beim normalen Reinigungsvorgang auf die zu schützende Oberfläche selbsttätig aufziehen und von Wasser nur langsam und über längeren, stetigen Gebrauch abgelöst werden, **dadurch gekennzeichnet, dass** der feste kompakte Körper oder Film im Inneren von Geschirrspülern bei Kontakt mit dem Spülwasser beim Spülvorgang eine geringe Menge der Polymeren abgibt, welche als Schutz- und Glanzfilm auf die Oberfläche von Porzellan, Emaille, Lack, Glas, Plastik und Metallflächen aufzieht.

2. Verwendung nach Anspruch 1, **dadurch gekennzeichnet, dass** die wasserlöslichen Polymeren Gelatine, Knochenleim, Stärke- oder chemisch modifizierte Stärkederivate, Polyvinylalkohol oder ein Gemisch dieser Stoffe sind.

3. Verwendung nach Anspruch 1 oder 2, **dadurch gekennzeichnet, dass** die wasserlöslichen Polymere zusätzlich noch Bestandteile und Wirkstoffe wie Bakterizide, Desinfektionsmittel, Parfüm- und Aromastoffe, Metallschutzmittel, Wasserenthärter, Säuren und andere Additive enthalten, welche die Anwendung für den Verbraucher angenehm machen.

4. Verwendung nach einem der Ansprüche 1 bis 3, **dadurch gekennzeichnet, dass** der feste kompakte Körper, der von den wasserlöslichen Polymeren geformt wird, eine Masse von 0,01 - 100 g, vorzugsweise von 0,1 - 30 g und die Form einer Scheibe, Folie, Kugel, Zitrone oder anderen Frucht hat und dass seine Masse, Form und Zusammensetzung so bemessen ist, dass er sich bei regelmäßigem Spülen im Geschirrspüler nach einer vorbestimmten Zeit völlig auflöst.

5. Verwendung nach einem der Ansprüche 1 bis 4, **dadurch gekennzeichnet, dass** der feste kompakte Körper oder Film durch Spritzgießen, Extrusion, Folienblasen oder einem anderen in der Kunststoffindustrie üblichen Verfahren hergestellt wird.

6. Verwendung nach Anspruch 4 oder 5, **dadurch gekennzeichnet, dass** der feste kompakte Körper mit einem kleinen Behälter oder Untersatz aus unlöslichem Material fest verbunden ist der das Wasser an den Körper kommen lässt und der seine Befestigung im Inneren des Geschirrspülers ermöglicht sowie ein Abtropfen verhindert.

7. Verwendung nach einem der Ansprüche 1 bis 6, **dadurch gekennzeichnet, dass** die wasserlöslichen Polymeren das feste Reinigungs-Pflegemittel als Film, Kapsel oder Drageemasse umschließen.

8. Verwendung nach einem der Ansprüche 1 bis 7, **dadurch gekennzeichnet, dass** die Schutz-, Glanz- und Pflegeschicht auf Biergläsern gebildet wird, wodurch die Stabilität des Schaums in den Gläsern verbessert wird.

## Claims

1. Use of water-soluble polymers in the form of one or more solid compact bodies or a film for forming a protective, glossy or preservative layer on the surface of commodities made of glass, ceramics, porcelain, clay, leather, metal and plastics, wherein the same automatically attach to the surface to be protected during the normal cleaning operation from an aqueous washing, preserving or cleaning solution and are separated from water only slowly and during an extended, constant usage, **characterized in that** inside dishwashers the solid compact body or film releases a small amount of the polymers upon contact with the washing water during the washing operation, which amount of polymers attaches to the surface of porcelain, enamel, lacquer, glass, plastics and metal surfaces as protective and glossy film.

2. The use as claimed in claim 1, **characterized in that** the water-soluble polymers are gelatin, bone glue, starch or chemically modified starch derivatives, polyvinyl alcohol or a mixture of these substances.

3. The use as claimed in claim 1 or 2, **characterized in that** the water-soluble polymers additionally contain components and active substances such as bactericides, disinfectants, perfumes and flavoring agents, metal protection agents, water softeners, acids and other additives which make the application convenient for the consumer.

4. The use as claimed in any of claims 1 to 3, **characterized in that** the solid compact body which is formed by the water-soluble polymers has a weight of 0.01 - 100 g, preferably 0.1 - 30 g, and the shape of a disk, film, ball, lemon or other fruit, and that its weight, shape and composition are dimensioned such that when washing regularly in the dishwasher it is dissolved completely after a predetermined period.

5. The use as claimed in any of claims 1 to 4, **characterized in that** the solid compact body or film is produced by injection molding, extrusion, film blowing or another method commonly used in the plastics industry.

6. The use as claimed in claim 4 or 5, **characterized in that** the solid compact body is firmly connected with a small container or base of insoluble material, which allows water to contact the body and which provides for its attachment inside the dishwasher and prevents dripping.

7. The use as claimed in any of claims 1 to 6, **characterized in that** the water-soluble polymers enclose the solid detergent and preservative agent as a film, capsule or dragée mass.

8. The use as claimed in any of claims 1 to 7, **characterized in that** the protective, glossy and preservative layer is formed on beer glasses, whereby the stability of the froth in the glasses is improved.

## Revendications

1. Utilisation de polymères solubles dans l'eau sous forme d'un ou de plusieurs corps solides ou d'un film pour former une couche de protection, de luisance et d'entretien sur la surface d'objets utilitaires en verre, en céramique, en porcelaine, en terre cuite, en cuir, en métal ou en plastique, ceux-ci s'appliquant automatiquement sur la surface à protéger à partir d'une solution aqueuse de lavage, d'entretien ou de nettoyage lors du processus de nettoyage normal et ne s'en détachant par l'eau que lentement et après un usage long et constant, **caractérisée en ce que** le corps solide et compact ou le film dégage, au cycle de rinçage et au contact avec l'eau de rinçage à l'intérieur de lave-vaisselle, une faible quantité de polymères qui s'appliquent sous forme de film de protection et de luisance sur la surface de porcelaine, d'émail, de laque, de verre, de plastique ou de surfaces métalliques.

2. Utilisation selon la revendication 1, **caractérisée en ce que** les polymères solubles dans l'eau sont de la gélatine, de l'osséine, des dérivés d'amidon ou des dérivés d'amidon chimiquement modifiés, de l'alcool polyvinylique ou un mélange de ces substances.

3. Utilisation selon la revendication 1 ou 2, **caractérisée en ce que** les polymères solubles dans l'eau contiennent encore additionnellement des éléments et des agents tels que des bactéricides, des désinfectants, des parfums ou substances aromatiques, des agents protecteurs de métal, des adoucisseurs d'eau, des acides et autres additifs qui rendre l'utilisation agréable au consommateur.

4. Utilisation selon l'une des revendications 1 à 3, **caractérisée en ce que** le corps solide compact qui est formé par les polymères solubles dans l'eau, a une masse de 0,01 à 100 g, de préférence de 0,1 à 30 g, et la forme d'un disque, d'une feuille, d'une boule, d'un citron ou d'un autre fruit, et **en ce que** sa masse, sa forme et sa composition ont des dimensions telles qu'il se dissout totalement après une durée de temps prédéterminée lors du rinçage régulier en lave-vaisselle.

5. Utilisation selon l'une des revendications 1 à 4, **caractérisée en ce que** le corps solide et compact ou le film est fabriqué par moulage par injection, par extrusion, par soufflage de feuille ou par un autre procédé usuel dans l'industrie des matières plastiques.

6. Utilisation selon la revendication 4 ou 5, **caractérisée en ce que** le corps solide et compact est relié de manière solidaire à un petit récipient ou socle en matériau insoluble qui laisse venir l'eau sur le corps, qui permet sa fixation à l'intérieur du lave-vaisselle et qui empêche un égouttement.

7. Utilisation selon l'une des revendications 1 à 6, **caractérisée en ce que** les polymères solubles dans l'eau entourent le produit d'entretien et de nettoyage solide sous forme de film, de capsule ou de masse de dragée.

8. Utilisation selon l'une des revendications 1 à 7, **caractérisée en ce que** la couche de protection, de luisance et d'entretien est formée sur des verres à bière, ce qui permet d'améliorer la stabilité de la mousse dans les verres.
